Europäisches Patentamt

European Patent Office

Office européen des brevets

(19)

(11) **EP 0 549 862 B1**

(12) **EUROPÄISCHE PATENTSCHRIFT**

(45) Veröffentlichungstag und Bekanntmachung des Hinweises auf die Patenterteilung:
**08.01.1997  Patentblatt 1997/02**

(51) Int Cl.⁶: **H04B 10/20**, G02B 6/44

(21) Anmeldenummer: **92117495.9**

(22) Anmeldetag: **14.10.1992**

(54) **Optisches Nachrichtennetz**

Optical communication network

Réseau de transmissions optique

(84) Benannte Vertragsstaaten:
**DE FR GB IT NL**

(30) Priorität: **29.11.1991  DE 4139301**

(43) Veröffentlichungstag der Anmeldung:
**07.07.1993  Patentblatt 1993/27**

(73) Patentinhaber: **KABELRHEYDT AKTIENGESELLSCHAFT**
**D-41201 Mönchengladbach (DE)**

(72) Erfinder:
• **Moers, Herbert, Dipl.-Ing.**
  **W-4052 Korschenbroich 1 (DE)**

• **Zamzow, Peter, Dipl.-Ing.**
  **W-4630 Bochum 1 (DE)**
• **Haag, Helmung, Dipl.-Ing.**
  **W-5177 Titz (DE)**

(74) Vertreter: **Mende, Eberhard, Dipl.-Ing.**
**Kabelkamp 20**
**30179 Hannover (DE)**

(56) Entgegenhaltungen:
**EP-A- 0 182 494           EP-A- 0 332 945**
**DE-A- 3 537 682           GB-A- 2 167 609**
**US-A- 4 961 623**

**Beschreibung**

Die Erfindung geht aus von einem optischen Nachrichtennetz gemäß dem Oberbegriff des Anspruchs 1.

Ein solches Nachrichtennetz ist aus der europäischen Patentanmeldung EP-A2 436 820 bekannt. Das dort beschriebene optische Nachrichtennetz weist in einer ersten Ausbaustufe ein von einem Amt kommendes gemeinsames Kabel auf, das bis zu einem Kabelverzweigungspunkt geführt ist. Dort wird über Verzweigungseinrichtungen eine Aufteilung in eine Vielzahl erdverlegter optischer Einzelkabel vorgenommen. Die Zahl der Lichtwellenleiter im gemeinsamen Kabel ist wesentlich kleiner als die Zahl der Lichtwellenleiter bei den erdverlegten optischen Einzelkabeln zu den Teilnehmern im Ortsnetz. In der ersten Ausbaustufe ist vorgesehen, daß Lichtwellenleiter vom Amt direkt zum Kunden durchgeschaltet werden, um sie z.B. mit Breitband-ISDN zu versorgen. Im Laufe der Zeit kommen weitere Teilnehmer hinzu und in einer zweiten Ausbaustufe erfolgt eine Abänderung dahingehend, daß ein gemeinsames Kabel in den vorhandenen Rohrzug eingebracht wird, welches eine Anzahl von Lichtwellenleitern aufweist, die mindestens der Zahl der Lichtwellenleiter der Einzelkabel entspricht, so daß die passiven Verzweigungseinrichtungen am Verzweigungspunkt entfernt werden können und die Lichtwellenleiter des gemeinsamen Kabels direkt über Schleifen in Lichtwellenleitern der Einselkabel durchzuverbinden sind. Voraussetzung für die wirtschaftliche Durchführbarkeit des Verfahrens ist dabei die Tatsache, daß in der ersten Ausbaustufe nur eine sehr geringe Zahl von optischen Adern vorgesehen ist, welche über Koppler zu den Teilnehmern verzweigt werden und daß eine große Zahl von Teilnehmern auch über herkommliche Kupferkabel versorgt werden kann. Deshalb ist es notwendig, in der zweiten Ausbauphase ein weiteres Kabel einzuziehen, welches wesentlich mehr optische Fasern enthält.

An dieser Netzstruktur ist nachteilig, daß in der ersten Ausbaustufe die Einrichtung einer Punkt-zu-Punkt-Verbindung zu einem Teilnehmer nur durch Rangieren erfolgen kann. Die Anschlüsse müssen zugänglich sein und werden dadurch aufwendig und somit teuer. Gerade beim Ausbau von optischen Nachrichtennetzen ist es oft nicht möglich, die Zahl der zukünftigen Teilnehmer festzulegen, oder auch gar festzulegen, welcher Teilnehmer bzw. welcher Abschlußpunkt AP, welcher sich in jedem Haus befindet, definitiv angeschlossen wird. Zunächst rechnet man auf Seiten der Netzbetreiber mit einem sehr geringen Ausbaufaktor, das bedeutet, daß beispielsweise bei einem Ausbaufaktor von 0,1 nur jeder zehnte Teilnehmer Dienste über ein LWL-Netz in Anspruch nimmt.

Der Erfindung liegt die Aufgabe zugrunde, ein optisches Nachrichtennetz nach dem Oberbegriff des Anspruchs 1 so zu gestalten, daß eine begrenzte Anzahl von Verbindungen zwischen dem Amt und einer Gruppe von Abschlußpunkten eingerichtet werden kann, ohne rangierbare Verzweigungspunkte zu benötigen.

Gelöst wird diese Aufgabe mit den im kennzeichnenden Teil des Anspruchs 1 angegebenen Merkmalen.

Der Gegenstand des Anspruchs 1 weist die Vorteile auf, daß eine optische Faser aus dem Abzweigkabel AK in den Verzweigungseinrichtungen zu mehreren Abschlußpunkten geführt wird und damit eine redundante Versorgung möglich ist. Diese Versorgungsart bedeutet, daß man unter den verschiedenen optischen Fasern noch eine gewisse Wahl treffen kann, um einen bestimmten Teilnehmer mit dieser Faser an das Nachrichtennetz anzuschließen. Die erhöhte Flexibilität führt in der Endausbaustufe dazu, daß sich Spleißdämpfungen gleichmäßiger verteilen lassen und daß ein Faserbruch im Teilnehmerkabel A überbrückt werden kann.

Die Erfindung wird nun anhand eines Ausführungsbeispiels unter Zuhilfenahme der Zeichnung näher erläutert. Dabei zeigt

Figur 1    die schematische Darstellung der Ortsverteilung

Figur 2    die schematische Darstellung der Anschlüsse der Abschlußpunkte

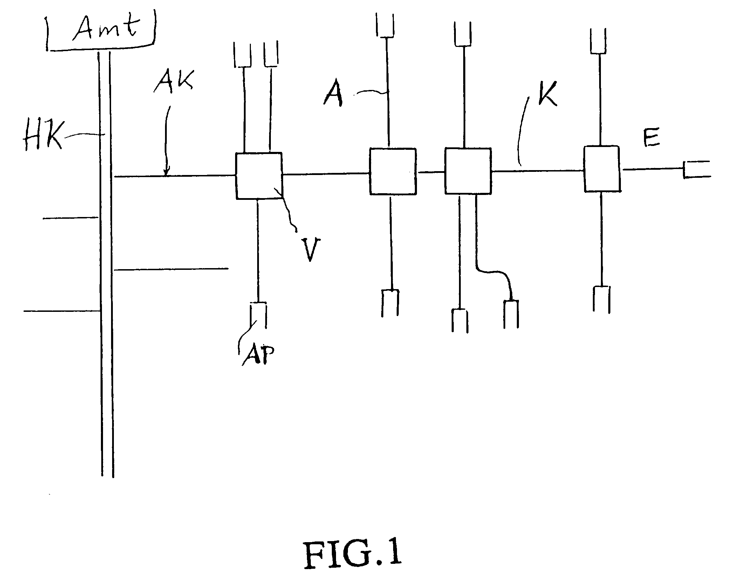

In einem Nachrichtennetz, welches für Breitbanddienste vorgesehen ist, werden in Zukunft vermehrt Lichtwellenleiter zur Informationsübertragung Verwendung finden. Im sogen. Ortsnetz wird beispielsweise entlang einer Hauptstraße ein Hauptkabel verlegt, von welchem in jeder Nebenstraße ein Anschlußkabel AK abzweigt (siehe Figur 1). An bestimmten Punkten werden über Verzweigungseinrichtungen V aus dem Abzweigkabel bestimmte Fasern zu Abschlußpunkten AP1...APN geführt. Die entsprechenden Spleiße befinden sich in der Verzweigungseinrichtung V.

Von diesen Verzweigungseinrichtungen V gehen m Teilnehmerkabel zu den jeweiligen Abschlußpunkten AP. Die Teilnehmerkabel enthalten in der Regel wie das Abzweigkabel A und die Verbindungskabel K 2n optische Fasern oder Lichtwellenleiter (LWL).

Das wesentliche der Erfindung besteht darin, daß die 2n optischen Fasern des Abzweigkabels nicht wie üblich an bestimmten Verzweigungspunkten bzw. Verzweigungseinrichtungen zu einem bestimmten Abschlußpunkt, d.h. einem Haus und den dort angeschlossenen Teilnehmern geführt werden, sondern daß die optischen Fasern an den Abschlußpunkten vorbeigeschleift werden. Damit wird zunächst für jeden Teilnehmer eine Anschlußmöglichkeit geschaffen. Da nicht alle Teilnehmer gleich in der ersten Ausbaustufe einen Anschluß wünschen, kann man zunächst von einem niedrigen Ausbaufaktor von etwa 1/4 bis 1/10 ausgehen. Den Teilnehmern, die sich in der ersten Ausbaustufe anschließen möchten, wird zunächst je eine optische Faser zugewiesen. Die Auswahl der optischen Fasern geschieht dadurch, daß eine der f Schleifen im Abschlußpunkt aufgetrennt wird und die zum Amt durchgehende Faser mit der Verbindungsleitung zum Teilnehmer gespleißt wird.

Da die Verschaltung des Netzes in den Verzweigungseinrichtungen starr ist, kann diese z.B. als kostengünstige unterirdische Muffe ausgelegt werden.

In einer zweiten Ausbaustufe, in der die Zahl der Teilnehmer, die sich an das Glasfaser-Ortsnetz anschließen wollen größer ist, als die Zahl der in ihrem Gebiet vorhandenen optischen Fasern, werden die Abschlußpunkte, dort wo es notwendig ist, mit passiven oder aktiven optischen Kopplern versehen. Auf diese Weise ist es möglich, mehrere Abschlußpunkte oder Teilnehmer mit einer optischen Faser zu versorgen. Da bis zu den Verzweigungseinrichtungen ohnehin bereits einige Spleißstellen zwischen der Sende- bzw. Empfangseinrichtung liegen, ist es wünschenswert, die Zahl der Spieiße zu begrenzen. Dies geschieht dadurch, daß die Zahl der Spleißstellen bis hin zu jedem Teilnehmer aufgelistet werden, und durch geeignete Wahl der Schleifen in den Abschlußpunkten eine gleichmäßige Auslastung der einzelnen optischen Fasern gewährleistet wird. Am Ende wird die Zahl der an jede optische Faser angeschlossenen Teilnehmer in einer im folgenden dargestellten Anordnung, die etwa der Versorgung einer Nebenstraße mit Häusern entspricht, annähernd konstant sein.

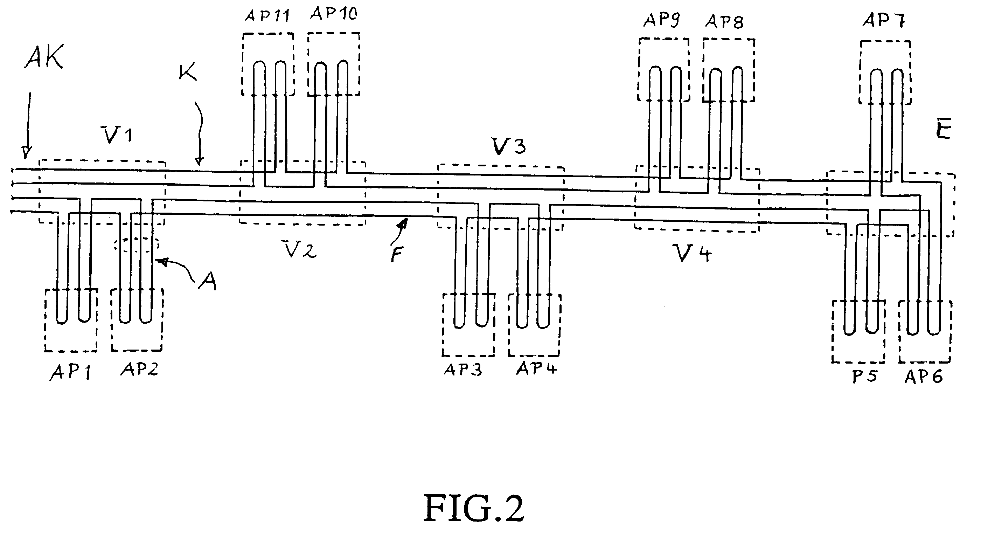

Im folgenden wird ein solches Beispiel näher erläutert. In Figur 2 sind 11 Abschlußpunkte dargestellt, welche Einzelhäusern zugeordnet sind. Für Mehrfamilienhäuser wären entsprechend der Zahl der Wohneinheiten mehrere Abschlußpunkte vorzusehen. In einem Hochhaus wäre die folgende Struktur auch anwendbar, wenn man sich vorstellt, daß das Abzweigkabel in das Haus eingeführt wird und die Verbindungskabel K die einzelnen Stockwerke untereinander und mit dem Amt verbinden. Die 4 optischen Fasern in Figur 2 sind so durch die 11 Abschlußpunkte (bzw. Häuser) hindurchgeschleift, daß eine optische Faser von mindestens 5 Abschlußpunkten genutzt werden kann. Jeweils 2 Fasern werden im Abschlußpunkt AP6 miteinander verbunden.

Zum Anschluß eines Teilnehmers an einen Abschlußpunkt wird in diesem eine der beiden Schleifen aufgetrennt und der Spleiß gesetzt. Dadurch geht allerdings die Verbindung der dahinterliegenden Abschlußpunkte mit dem Amt bzw. der Zentrale verloren. Auf diese Weise kann man also bis 2n (also beispielsweise 4) Teilnehmer anschließen. Die Verzweigungseinrichtungen V1 bis V4 sind jeweils mit 2 Abschlußpunkten verbunden. Die Endverzweigungseinrichtung E ist mit 3 Abschlußpunkten verbunden. Jede der 4 Fasern bildet in ihrer Linienführung 5 Schleifen und 1 Endschleife im Abschlußpunkt 6.

Selbstverständlich lassen sich auch Anschlußkabel mit 6, 8, oder mehr Fasern in ähnlicher Weise verschalten. 2n Fasern werden in der Endverzweigungseinrichtung E zu n Schleifen verbunden, so daß für jeden Abschlußpunkt mehrere Anschlußmöglichkeiten vorliegen. Bei t Verzweigungseinrichtungen im Abzweigkabel und m Abschlußpunkten pro Verzweigungseinrichtung, wobei jeder Abschlußpunkt s Schleifen aufweist, gelten folgende Bemessungsrichtlinien:

$$1 \leq s \leq n$$

$$1 \leq m \leq 2n$$

$$t \geq n$$

Die Gesamtzahl der Schleifen ist möglichst gleichmäßig auf die 2n Fasern zu verteilen.

Wenn man in einer weiteren Ausbaustufe mehr als 2n Teilnehmer anschließen möchte, sind in den Abschlußpunkten passive oder aktive Koppler vorzusehen.

## Patentansprüche

1. Optisches Nachrichtennetz mit einem vom Amt oder einer Zentrale kommenden Hauptkabel mit optischen Fasern zur Versorgung von Abschlußpunkten, über im Kabelverlauf eingesetzte Verzweigungseinrichtungen, **dadurch gekennzeichnet,** daß die Verzweigungseinrichtungen (V) mit Verbindungskabeln (K) hintereinandergeschaltet sind, daß die Verbindungskabel (K) für einen Versorgungsbereich jeweils 2n optische Fasern (F) aufweisen, welche an einer Endeinrichtung (E) zu n Schleifen verbunden sind, daß ein Teil der 2n optischen Fasern in jeder Verzweigungseinrichtung an m≥1 Abschlußpunkten (AP) vorbeigeschleift ist und daß n≥2 gewählt ist.

2. Optisches Nachrichtennetz nach Anspruch 1, dadurch gekennzeichnet, daß die Abschlußpunkte (AP) mit den Verzweigungseinrichtungen (V) mit Abzweigkabeln (A) verbunden sind, welche optische Fasern (F) bis zu einer maximalen Anzahl 2n enthalten.

3. Optisches Nachrichtennetz nach Anspruch 1 oder 2, dadurch gekennkeichnet, daß die 2n optischen Fasern (F) von einer Verzweigungseinrichtung (V) zu m Abschlußpunkten (AP) in Form von s Schleifen geführt sind, wobei gilt: $1 \leq s \leq n$.

4. Optisches Nachrichtennetz nach einem der Ansprüche 1 bis 3, dadurch gekennzeichnet, daß die in den Abschlußpunkten (AP) installierten Schleifen sich in etwa zu gleichen Teilen auf die optischen Fasern (F) verteilen.

5. Optisches Nachrichtennetz nach einem der Ansprüche 1 bis 4, dadurch gekennzeichnet, daß die Schleifen in den Abschlußpunkten (AP) zum Anschluß eines Teilnehmers auftrennbar sind.

6. Optisches Nachrichtennetz nach einem der Ansprüche 1 bis 5, dadurch gekennzeichnet, daß im Abschlußpunkt (AP) ein Teilnehmer nach Auftrennen einer Schleife über eine direkte Verbindung an die Zentrale anschließbar ist.

7. Optisches Nachrichtennetz nach einem der Ansprüche 1 bis 5, dadurch gekennzeichnet, daß im Abschlußpunkt (AP) ein Teilnehmer nach Auftrennen einer Schleife über einen passiven oder aktiven Koppler an die Zentrale anschließbar ist.

8. Optisches Nachrichtennetz nach einem der Ansprüche 1 bis 7, dadurch gekennzeichnet, daß der in der Verzweigungseinrichtung (V) abzweigende Teil des Abzweigkabels vorgefertigt ist.

9. Optisches Nachrichtennetz nach einem der Ansprüche 1 - 8, dadurch gekennzeichnet, daß die Verschaltung in der Verzweigungseinrichtung (V) durch ein vorkonfektioniertes Bauteil erfolgt.

10. Optisches Nachrichtennetz nach einem der Ansprüche 1 - 9, dadurch gekennzeichnet, daß mittels eines Abzweigkabels ein weiteres optisches Nachrichtennetz mit Verzweigungseinrichtungen, Verbindungskabeln, Abzweigkabeln und Abschlußpunkten, bzw. einer Endeinrichtung angeschlossen ist.

11. Optisches Nachrichtennetz nach einem der Ansprüche 1 - 10, dadurch gekennzeichnet, daß zur Verschaltung des Netzes in den Verzweigungseinrichtungen (V) mechanische Spleiße eingesetzt sind.

12. Optisches Nachrichtennetz nach einem der Ansprüche 1 - 10, dadurch gekennzeichnet, daß zur Verschaltung des Netzes in den Verzweigungseinrichtungen (V) Steckverbinder eingesetzt sind.

**Claims**

1. Optical communication network having a main cable coming from the exchange or a switching centre, having optical fibres for the supply of termination points via branching devices inserted in the cable run, characterized in that the branching devices (V) are connected one after another with connecting cables (K), in that the connecting cables (K) for one supply section in each case have 2n optical fibres (F) which are connected at an end device (E) to form n loops, in that some of the 2n optical fibres in each branching device are looped past $m \geq 1$ termination

points (AP) and in that $n \geq 2$ is selected.

2. Optical communication network according to Claim 1, characterized in that the termination points (AP) are connected to the branching devices (V) using branching-off cables (A) which contain optical fibres (F) up to a maximum number of 2n.

3. Optical communication network according to Claim 1 or 2, characterized in that the 2n optical fibres (F) are led from a branching device (V) to m termination points (AP) in the form of s loops, it being true that: $1 \leq s \leq n$.

4. Optical communication network according to one of Claims 1 to 3, characterized in that the loops installed in the termination points (AP) are distributed over the optical fibres (F) in approximately equal parts.

5. Optical communication network according to one of Claims 1 to 4, characterized in that the loops in the termination points (AP) can be cut for the connection of a subscriber.

6. Optical communication network according to one of Claims 1 to 5, characterized in that, in the termination point (AP), a subscriber can be connected to the switching centre via a direct connection following the cutting of a loop.

7. Optical communication network according to one of Claims 1 to 5, characterized in that, in the termination point (AP), a subscriber can be connected to the switching centre via a passive or active coupler following the cutting of a loop.

8. Optical communication network according to one of Claims 1 to 7, characterized in that that part of the branching-off cable which branches off in the branching device (V) is prefabricated.

9. Optical communication network according to one of Claims 1 - 8, characterized in that the wiring in the branching device (V) is carried out by means of a premanufactured assembly.

10. Optical communication network according to one of Claims 1 - 9, characterized in that a further optical communication network having branching devices, connecting cables, branching-off cables and termination points and an end device is connected by means of a branching-off cable.

11. Optical communication network according to one of Claims 1 - 10, characterized in that, for wiring the network, mechanical splices are used in the branching devices (V).

**12.** Optical communication network according to one of Claims 1 - 10, characterized in that, for wiring the network, plug connectors are used in the branching devices (V).

**Revendications**

**1.** Réseau de communications optiques comprenant un câble principal venant d'un bureau ou d'une centrale, présentant des fibres optiques destinées à alimenter des points de terminaison par l'intermédiaire de dispositifs de dérivation placés sur le trajet du câble, caractérisé en ce que les dispositifs de bifurcation (V) sont montés les uns derrière les autres avec des câbles de liaison (K), en ce que les câbles de liaison (K) présentent à chaque fois pour une zone desservie 2n fibres optiques (F) reliées en n boucles à un ensemble terminal (E), en ce qu'une partie des 2n fibres optiques est bouclée dans chaque dispositif de dérivation en passant devant m≥1 points de terminaison (AP), et en ce que l'on choisit n≥2.

**2.** Réseau de communications optiques selon la revendication 1, caractérisé en ce que les points de terminaison (AP) sont reliés aux dispositifs de dérivation (V) par des câbles de branchement (A) comportant des fibres optiques (F) jusqu'à un nombre maximal 2n.

**3.** Réseau de communications optiques selon la revendication 1 ou la revendication 2, caractérisé en ce que les 2n fibres optiques (F) sont conduites d'un dispositif de dérivation (V) à m points de terminaison (AP) sous la forme de s boucles, avec 1 ≤ s ≤ n.

**4.** Réseau de communications optiques selon l'une des revendications 1 à 3, caractérisé en ce que les boucles installées dans les points de terminaison (AP) se répartissent en parties sensiblement égales sur les fibres optiques (F).

**5.** Réseau de communications optiques selon l'une des revendications 1 à 4, caractérisé en ce que les boucles peuvent être défaites dans les points de terminaison (AP), aux fins de raccordement d'un abonné.

**6.** Réseau de communications optiques selon l'une des revendications 1 à 5, caractérisé en ce qu'un abonné peut être raccordé au point de terminaison (AP), après qu'une boucle a été défaite, par l'intermédiaire une liaison directe au central.

**7.** Réseau de communications optiques selon l'une des revendications 1 à 5, caractérisé en ce qu'au point de terminaison (AP), un abonné peut être raccordé à la centrale par l'intermédiaire d'un coupleur actif ou passif, après qu'une boucle a été défaite.

**8.** Réseau de communications optiques selon l'une des revendications 1 à 7, caractérisé en ce que la partie du câble de branchement se branchant dans le dispositif de dérivation (V) est préfabriquée.

**9.** Réseau de communications optiques selon l'une des revendications 1 à 8, caractérisé en ce que le câblage dans le dispositif de dérivation (V) est effectué avec un élément préconfectionné.

**10.** Réseau de communications optiques selon l'une des revendications 1 à 9, caractérisé en ce que l'on raccorde, au moyen d'un câble de branchement, un autre réseau de communications optiques comportant des dispositifs de dérivation, des câbles de liaison, des câbles de branchement et des points de terminaison, ou un ensemble terminal.

**11.** Réseau de communications optiques selon l'une des revendications 1 à 10, caractérisé en ce que des épissures mécaniques sont placées dans les dispositifs de dérivation (V), aux fins de câblage du réseau.

**12.** Réseau de communications optiques selon l'une des revendications 1 à 10, caractérisé en ce que des connecteurs multiples sont placés dans les dispositifs de dérivation (V), aux fins de câblage du réseau.

FIG.1

FIG.2

EP 0 549 862 B1